# EUROPÄISCHE PATENTANMELDUNG

(11) **EP 1 589 083 A2**
(43) Veröffentlichungstag der Anmeldung: **26.10.2005**
(21) Anmeldenummer: 05006512.7
(22) Anmeldetag: 24.03.2005
(51) Int. Cl.: C09D 175/04, B28B 1/52

(54) **Beschichtung von Faserzementplatten**

(30) Priorität: 13.04.2004 CH 6382004
(71) Anmelder: ETERNIT AG, CH-8867 Niederurnen (CH)
(72) Erfinder: Trabesinger, Gerald, 8722 Kaltbrunn (CH)
(74) Vertreter: Troesch Scheidegger Werner AG

(57) **Zusammenfassung**

Formulierungen zum Beschichten von mindestens ein wasserbasierendes Bindemittel und/oder einen keramischen Werkstoff enthaltenden flächigen Plattenelementen bestehen, bevorzugt aus einer Mischung mindestens zweier Dispersionen, wobei mindestens die eine Dispersion filmbildende Eigenschaft aufweist und die andere Dispersion Komponenten mit funktionellen Gruppen enthält, welche geeignet sind um nach Applikation der Formulierung eine chemische Reaktion mit Komponenten, gegebenenfalls mit einer weiteren Beschichtung und/oder eines Klebstoffes, einzugehen. Gemäss einer Ausführungsvariante wird vorgeschlagen, dass mindestens eine der Dispersionen selbstvernetzende Polymerketten enthält. Die andere Dispersion enthält bevorzugt Komponenten mit reaktiven Gruppen, welche geeignet sind um mit Isocyanatgruppen zu reagieren.

## Beschreibung

Die vorliegende Erfindung betrifft eine Formulierung und ein Verfahren zum Beschichten von mindestens auf einem wasserbasierenden Bindemittel und/oder auf einem keramischen Werkstoff basierenden flächigen Plattenelement gemäss dem Oberbegriff nach Anspruch 1, eine Verwendung der Formulierung oder des Verfahrens sowie eine Faserzementplatte, beschichtet mittels einer Formulierung resp. eines Verfahrens.

Faserzementplatten können sich je nach Umgebungsbedingung, wie Temperatur, Feuchtigkeit, etc., verformen. So können beispielsweise an einer Fassade angebrachte Faserzementplatten sich derart verformen, dass sowohl sogenannte Schüsselung (Absenken der Vorderseite gegenüber Null-Linie der unverformten Platte), wie auch ein Bombieren (Abheben der Vorderseite gegenüber der Null-Linie der unverformten Platte) auftreten kann. Die Folge davon sind unebene Wandflächen, welche das Erscheinungsbild der Fassade stark beeinträchtigen.

In der Regel werden deshalb solche Platten wenigstens einseitig beschichtet, um ein Verformen zu verhindern.

In der Praxis hat es sich aber gezeigt, dass durch das Anbringen von Beschichtungen die Platten beim Stapeln aneinander "kleben", so dass es wichtig ist, dass die Beschichtung die Anforderungen an die sogenannte Blockfestigkeit erfüllt.

Nebst der Blockfestigkeit muss auch die dauerhafte Haftung zu den Klebstoffen oder zu Primer mit anschliessender Klebstoff-Applikation gewährleistet werden.

Entsprechend ist es eine Aufgabe der vorliegenden Erfindung, eine Platte, aufweisend ein wasserbasierendes Bindemittel und/oder auf Basis eines keramischen Werkstoffes, wie insbesondere Faserzementplatten oder Tonplatten, derart auszurüsten, dass die eingangs erwähnten geforderten Eigenschaften erzielt werden können.

Erfindungsgemäss wird eine Formulierung und ein Verfahren zum Ausrüsten bzw. Beschichten einer Platte der eingangs erwähnten Art gemäss dem Wortlaut nach Anspruch 1 bzw. nach Anspruch 9 vorgeschlagen.

Vorgeschlagen wird, dass auf mindestens einer flächigen Seite der Platte eine Beschichtung appliziert wird, wobei für die Beschichtung eine Formulierung verwendet wird, bestehend aus mindestens zwei Dispersionen, wobei die eine Dispersion filmbildende sowie Blockfestigkeit gewährleistende Eigenschaften aufweist und die andere Dispersion Komponenten mit funktionellen Gruppen enthält, welche geeignet sind um nach Applikation der Beschichtung eine chemische Reaktion mit Komponenten in gegebenenfalls weiteren Beschichtungen, wie dem eingangs erwähnten Kleber oder mit sogenannten Primern einzugehen.

Es hat sich gezeigt, dass es vorteilhaft ist, eine Dispersion zu verwenden, welche selbstvernetzende Polymerketten aufweist. Dadurch wird einerseits eine gute Filmbildung erzielt, im Weiteren eine gute Haftung auf dem Untergrund sowie eine ausreichende Härte der Beschichtung.

Insbesondere die Blockfestigkeit der Beschichtung kann dadurch erhöht werden.

Die andere Dispersion weist vorzugsweise Komponenten mit reaktiven Gruppen auf, welche geeignet sind, eine gute Adhäsion zu Klebstoffen, wie beispielsweise 1K-PUR-Bauklebstoffen, zu ermöglichen. Entsprechend ist es vorteilhaft, wenn die reaktiven Gruppen der Komponenten in der Dispersion geeignet sind für Reaktion mit IsocyanatGruppen, welche in den erwähnten 1K-PUR-Bauklebstoffen vorhanden sind.

Die Dispersionen sind vorteilhafterweise wässrige Dispersionen auf Basis Acrylpolymer, wobei die Polymere selbstvernetzend sind. Vorgeschlagen wird beispielsweise eine wässrige Dispersion auf Basis Acrylat-Styrolpolymer oder die Verwendung einer Epoxy-funktionalisierten Acrylatdispersion.

Allerdings sind-auch andere wässrige Polymerdispersionen denkbar, wie beispielsweise Dispersionen auf Basis Polyurethan, Silikon, Epoxy, etc., wie beispielsweise Silikon-Acrylat-Dispersionen.

Weiter ist es selbstverständlich möglich, den Dispersionen filmbildende Additive und/oder haftverbessernde Additive beizufügen, wie auch Entschäumungsmittel.

Weiter vorgeschlagen wird die Verwendung einer wässrigen Acrylatdispersion, aufweisend Komponenten mit reaktiven Gruppen, wie HO-, Thiol-, Amino-, Epoxy- und/oder Episulfidgruppen.

Bevorzugt wird eine Dispersion mit Epoxy-funktionalisierten Gruppen vorgeschlagen.

Schliesslich ist es möglich, beispielsweise für die Verbesserung der Filmbildung oder der Haftung, zusätzlich Lösemittel den Dispersionen beizufügen.

Für das Applizieren werden zunächst die beiden wässrigen Dispersionen in einem Mischgefäss mittels eines Mischaggregats, wie beispielsweise einem Dissolver, derart miteinander gemischt, dass eine wenigstens nahezu homogene Mischung entsteht. Anschliessend wird die Mischung der beiden wässrigen Dispersionen mittels Giessen, Spritzen, mittels Kalander, etc., auf die eine Seite der Platte aufgetragen.

Weitere bevorzugte Ausführungsvarianten des erfindungsgemässen Verfahrens sind in den abhängigen Ansprüchen erwähnt.

Die erfindungsgemäss definierten Verfahren sind insbesondere geeignet für das Beschichten bzw. Ausrüsten von Faserzementplatten.

Anhand des nachfolgend beschriebenen Ausführungsbeispiels soll die Erfindung näher erläutert werden.

Bei der Erfindung handelt es sich bekanntlich um eine Kombination von zwei Dispersionen, wobei gemäss Ausführungsbeispiel zwei auf Wasser basierende Acrylatdispersionen verwendet werden, wobei es sich um die beiden Dispersionen vom Typ Setalux 6755 AQ-40 und Setalux 8551 AQ-45 der Firma Akzo Nobel handelt. Beim System Setalux 6755 AQ-40 handelt es sich um eine Acrylat-Styrolpolymer-Dispersion. Diese Dispersion weist folgende Spezifikationen auf:
Festkörpergehalt: 39-41%
pH: 7.0 - 9.0
Dichte: [g/cm³] ca. 1.04
Flammpunkt: > 65°C
MFT: < 10°C

Die weitere Dispersion Setalux 8551 AQ-45 ist eine Epoxy-funktionalisierte Dispersion, welche normalerweise als eine von zwei Komponenten in einer zweikomponenten Epoxy-Aminhärtenden Dispersion benützt wird. Sie weist einen Festkörpergehalt von 43 - 46% auf, eine Dichte [g/CM³] von 1.05, einen Flammpunkt > 65°C sowie ein Epoxy-Equivalentgewicht, bezogen auf den Festkörpergehalt von 621. Diese beiden Dispersionen werden in einem Mischbehälter mittels eines Dissolvers gemäss der nachfolgenden Formulierung bei Raumtemperatur intensiv gemischt, bis eine weitgehendst homogene Dispersion entstanden ist:

| Formulierung (GT - 103*): | |
|---|---|
| Setalux 6755 AQ-40 | 84.0gr |
| Dowanol PPh | 3.5 gr (Filmbildner) |
| Drewplus T4201 | 0.3 gr (Entschäumer) |
| Borchicoll BC 20 | 12.7 gr (Haftverbesserer) |
| Setalux 8551 AQ-45 | 11.0 gr |
| Total | 111.5 gr |

| | |
|---|---|
| *Interne Bezeichnung Dowanol = eingetragen WZ der Fa. Dow Chemicals Drewplus = eingetragen WZ der Fa. Drew Chemical Corp. Borchicoll = eingetragen WZ der Fa. Borchers | |

Zusätzlich können die Dispersionen weitere Zusatzstoffe, Additive oder Hilfsstoffe enthalten, wie zum Beispiel Pigmente, Farbstoffe, Emulgatoren, Pigment-Dispergieradditive, Benetzungs- und Oberflächenadditive, Antioxidantien, Absetzadditive, Hitze-Stabilisatoren, UV-Absorber und Füllstoffe, Katalysatoren, etc.

Anschliessend wird die so hergestellte, wässrige Dispersion mittels eines Kalanders auf die Rückseite von Faserzementplatten aufgetragen. Eine Vorbehandlung des Faserzementplatte ist dabei nicht notwendig.

Die Dispersion mit der Bezeichnung Setalux 6755 AQ-40 stellt dabei vor allem die Stabilisierung der Platte gegenüber der Bombierung und der Schüsselung sicher, sowie eine gute Blockfestigkeit. Diese Eigenschaften ergeben sich insbesondere dadurch, indem diese Dispersion sogenannt doppelt-selbstvernetzende Polymerketten enthält, was für die Erzielung der genannten Eigenschaften von Vorteil ist.

Die Epoxy-funktionalisierte Dispersion Setalux 8551 AQ-45 stellt vor allem eine deutliche Verbesserung der Haftung sowie eine weitere Verbesserung im Bombierungs- und Schüsselungs-Verhalten sicher.

Die Isocyanatgruppen-enthaltenden Prepolymere, beispielsweise eines 1K PUR-Klebstoffes, welcher in der Regel für das Befestigen von Faserzementplatten auf eine Unterkonstruktion bestehend aus Aluminium oder Holz in Bauwerken verwendet wird, reagieren nach Applikation des Klebstoffes mit der Luftfeuchtigkeit unter Abspaltung von CO₂ zu einer Aminogruppe. Diese kann einerseits mit einer Isocyanatgruppe eines weiteren Prepolymers im Klebstoff zu einem Harnstoff reagieren, was zur Vernetzung des Klebstoffes führt. Anderseits steht diese Aminogruppe an der Grenzfläche für eine Reaktion mit entsprechend chemisch reaktiven Gruppen zur Verfügung. Eine solche Gruppe kann eine Epoxyfunktion sein, wie in der erwähnten Dispersion Setalux 8551 AQ-45 vorhanden, welche mit der Aminogruppe eine Additionsreaktion eingeht, und über die neu gebildete Bindung die Haftung der Dispersionsbeschichtung auf der Faserzementplatte zum Klebstoff sicherstellt. Zwar wird normalerweise zwischen Klebstoff und Rückseitenbeschichtung ein Primer appliziert, welcher selbst sowohl Isocyanat-frei als auch Isocyanat-enthaltend sein kann. Doch allfällige Lösemittel und/oder Weichmacher, welche in der Regel in einem Klebstoff enthalten sind, können den noch nicht vollständig vernetzten Primer anlösen oder aufweichen und somit in Kontakt zur haftfreundlichen Rückseitenbeschichtung treten. Versuche mit und/oder ohne Primer zeigen in beiden Fällen eine deutliche Verbesserung der Haftung, was auf die Epoxyfunktionalitäten in der erfindungsgemässen verwendeten Dispersion zurückzuführen ist.

Anhand von Versuchen konnte eindeutig nachgewiesen werden, dass mit Hilfe einer Formulierung mit der Bezeichnung GT103, d.h. der Kombination der zwei oben erwähnten Acrylatdispersionen die geforderten Anforderungen besser erfüllt werden können als mit Beschichtungen wie aus dem Stand der Technik bekannt.

So wurde beispielsweise an Faserzementplatten eine Formulierung mit der Bezeichnung GT93 appliziert, lediglich beinhaltend die Dispersion mit der Bezeichnung Setalux 6755 AQ-40, womit eine Verbesserung der Stabilisierung der Platte erreicht werden kann, sowie eine Verbesserung der Blockfestigkeit. Hingegen zeigt sich eine wesentlich schlechtere Haftung zum erwähnten Bauklebstoff und sogenannte Peeltests (= Schältest) zur Überprüfung der Haftung des Klebstoffes auf der rückseitigen Beschichtung ergaben, dass der Bruch weitgehendst entlang der Grenzfläche zwischen Klebstoff und Beschichtung verlief. Im Gegensatz dazu ergab ein Peeltest oder Schältest bei Verwendung der erfindungsgemäss kombinierten Dispersion, dass der Klebstoff in sich bricht (kohäsiv) also auf der Rückseitenbeschichtung zurück bleibt. Interessant dabei ist, dass eine Verbesserung sowohl mit Verwendung eines Primers oder ohne Verwendung eines Primers erzielt wird.

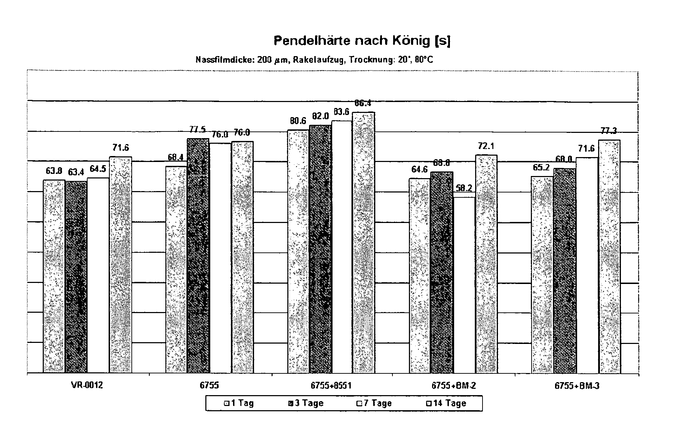

Weiter wurden Pendelhärten gemessen, bei Lacken eine gebräuchliche Methode um die Elastizität und Verformbarkeit der Oberfläche festzustellen. Aus dem Balkendiagramm, dargestellt in Figur 1, wird ersichtlich, dass die erfindungsgemässe Bindemittelmischung (gekennzeichnet mit 6755+8551) die Pendelschwingung am wenigstens dämpft bzw. die Messzeit bis zur Dämpfung der Schwingungen ist am höchsten. Dies korreliert mit einer hohen Blockfestigkeit (Stapelbarkeit von beschichteten Platten, ohne dass die Beschichtung Schaden nimmt). Die Messungen wurden zu verschiedenen Zeitpunkten durchgeführt und es ist ersichtlich, dass die Pendelhärte schon nach einem Tag die höchste ist im Vergleich zu den anderen gemessenen Versionen. Dies ist wichtig, da die beschichteten Platten unmittelbar nach der Beschichtung bereits gestapelt werden, und somit einer Belastung ausgesetzt sind. In Bezug auf den in der Figur 1 verwendeten Abkürzungen sei folgendes ergänzt:
VR-0012 = aus dem Stand der Technik bekannte und heute gebrauchte Rückseitenbeschichtung,
BM-2 und BM-3 = Bindemittel 2 und 3 als Vergleichsmessungen, wobei
BM-2 = Mowilith 7714 und
BM-3 = Mowilith 7411, beides wässrige Acrylat-Dispersionen der Firma Celanese sind.

Figur 1 zeigt Pendelhärte nach König (s) bei einer Nassfilmdicke von 200 µm, Rakelaufzug und Trocknung 20min bei 80°C.

Wiederum ein ähnliches Bild ergibt sich, wie bereits oben erwähnt, beim Blocktest, indem bei Platten unter Verwendung von heute üblichen Rückseitenbeschichtungen deutliche Ausrisse auf der Platte zu erkennen sind. Bei Verwendung, insbesondere der erfindungsgemäss vorgeschlagenen kombinierten Dispersion, ergibt sich demgegenüber eine Verbesserung, vor allem im Vergleich mit den heute üblichen Rückseitenbeschichtungen, indem praktisch keine Ausrisse bemerkbar sind.

Bei der beispielsweise beschriebenen Dispersion unter Verwendung der beiden Acrylatdispersionen Setalux 6755 AQ-40 und Setalux 8551 AQ-45 handelt es sich selbstverständlich nur um ein Beispiel um die vorliegende Erfindung näher zu erläutern. Selbstverständlich ist die Erfindung in keiner Weise auf die erfindungsgemäss beschriebene Kombination der beiden Dispersionen beschränkt. Selbstverständlich ist es möglich, irgendwelche andere geeignete Kombinationen von Dispersionen zu verwenden, wesentlich dabei ist, dass die eine der beiden Dispersionen, welche vor der Applikation miteinander gemischt werden, filmbildenden Charakter aufweist und die andere funktionelle Gruppen enthält, um mit einer weiteren Beschichtung bzw. mit einem Klebstoff chemisch reagieren zu können.

## Patentansprüche

1. Formulierung zum Beschichten von mindestens ein wasserbasierendes Bindemittel und/oder einen keramischen Werkstoff enthaltenden flächigen Plattenelementen, **gekennzeichnet durch** eine Mischung mindestens zweier Dispersionen, wobei mindestens die eine Dispersion filmbildende Eigenschaften aufweist und die andere Dispersion Komponenten mit funktionellen Gruppen enthält, geeignet um nach Applikation der Formulierung eine chemische Reaktion mit Komponenten gegebenenfalls einer weiteren Beschichtung und/oder eines Klebstoffes einzugehen.

2. Formulierung nach Anspruch 1, **dadurch gekennzeichnet, dass** mindestens eine der Dispersionen selbstvernetzende Polymerketten enthält.

3. Formulierung nach einem der Ansprüche 1 oder 2, **dadurch gekennzeichnet, dass** die andere Dispersion Komponenten mit reaktiven Gruppen enthält, welche geeignet sind um mit Isocyanatgruppen zu reagieren.

4. Formulierung nach einem der Ansprüche 1 bis 3, **dadurch gekennzeichnet, dass** die andere Dispersion eine wässrige Acrylatdispersion ist, aufweisend Komponenten mit reaktiven Gruppen, wie HO-, Thiol-, Amino-, Epoxy- und/oder Episulfidgruppen.

5. Formulierung nach einem der Ansprüche 1 bis 4, **dadurch gekennzeichnet, dass** die andere Dispersion Epoxy-funktionalisierte Gruppen enthält.

6. Formulierung nach einem der Ansprüche 1 bis 5, **dadurch gekennzeichnet, dass** die eine Dispersion eine wässrige Dispersion auf Basis Acrylpolymer ist mit selbstvernetzenden Polymeren.

7. Formulierung nach einem der Ansprüche 1 bis 6, **dadurch gekennzeichnet, dass** mindestens eine der Dispersionen einen Zusatzstoff, ein Additiv oder einen Hilfsstoff, ausgewählt aus der nachfolgenden Liste, enthält:
Pigmente, Farbstoffe, Emulgatoren, Schutzkoloide, Pigmentdispergier-Additive, Benetzungs- und
Oberflächenadditive, Antioxydantien, Entschäumer, Antiabsetzadditive, Hitzestabilisatoren, UV-Absorber, Füllstoffe, Katalysatoren, filmbildende und/oder haftverbessernde Additive.

8. Formulierung nach einem der Ansprüche 1 bis 9, **dadurch gekennzeichnet, dass** mindestens eine der Dispersionen ein Lösemittel enthält, wie beispielsweise wassermischbare Glykoläther, wie Butylglykol, Butyldiglykol, Dipropylen-Glykolmonomethyl- oder Dipropylen-Glykolmonobutyläther, deren Acetate sowie ferner Ester von Mono- und Dicarbonsäuren, wie beispielsweise Tripropylenglykolmonoisobutyrat.

9. Verfahren zum Beschichten von mindestens ein wasserbasierendes Bindemittel und/oder einen keramischen Werkstoff enthaltenden flächigen Plattenelementen mittels einer Formulierung nach einem der Ansprüche 1 bis 8, **dadurch gekennzeichnet, dass** mindestens eine der flächigen Seiten der Platten mit mindestens einer Beschichtung versehen wird, wobei mindestens für die Beschichtung eine Mischung mindestens zweier Dispersionen verwendet wird, wobei die eine Dispersion filmbildende Eigenschaften aufweist und die andere Dispersion Komponenten mit funktionellen Gruppen enthält, geeignet um nach Applikation der Beschichtung eine chemische Reaktion mit Komponenten gegebenenfalls einer weiteren Beschichtung und/oder eines Klebstoffes einzugehen.

10. Verfahren nach Anspruch 9, **dadurch gekennzeichnet, dass** eine Acrylatstyrol-Dispersion verwendet wird.

11. Verfahren nach einem der Ansprüche 9 oder 10, **dadurch gekennzeichnet, dass** eine Amin-funktionalisierte Acrylatdispersion verwendet wird.

12. Verfahren nach einem der Ansprüche 9 bis 11, **dadurch gekennzeichnet, dass** die beiden Dispersionen in einem Mischgefäss mittels eines Mischaggregates, wie einem Dissolver, miteinander bis zur Bildung einer wenigstens weitgehendst homogenen Mischung gemischt werden, und anschliessend die Platte mittels Spritzen, Giessen oder mittels eines Kaladers verschichtet wird.

13. Verwendung der Formulierung nach einem der Ansprüche 1 bis 8 sowie des Verfahrens nach einem der Ansprüche 9 bis 12 zur Beschichtung von Faserzementplatten oder Keramikplatten bzw. Tonplatten.

14. Faserzementplatte beschichtet mittels einer Beschichtung, hergestellt mittels einer Formulierung nach einem der Ansprüche 1 bis 8 oder eines Verfahrens nach einem der Ansprüche 9 bis 12.
